# EUROPÄISCHE PATENTSCHRIFT

(11) **EP 3 016 247 B1**
(45) Veröffentlichungstag und Bekanntmachung des Hinweises auf die Patenterteilung: **21.03.2018**
(21) Anmeldenummer: 15188468.1
(22) Anmeldetag: 06.10.2015
(51) Int. Cl.: H02K 3/28, H02K 7/116, H02K 7/14, H02K 16/00, E05F 15/662, E05F 15/643

(54) **TÜRANTRIEB**
DOOR DRIVE
ENTRAINEMENT DE PORTE

(30) Priorität: 31.10.2014 DE 102014115929
(43) Veröffentlichungstag der Anmeldung: 04.05.2016
(73) Patentinhaber: dormakaba Deutschland GmbH, 58256 Ennepetal (DE)
(72) Erfinder: Wagner, Martin, 58256 Ennepetal (DE); Busch, Sven, 58256 Ennepetal (DE)
(74) Vertreter: Balder IP Law, S.L.

(56) Entgegenhaltungen:
- EP-A2- 1 688 576
- DE-A1-102007 007 578
- US-A- 4 635 349
- US-A- 5 929 549

## Beschreibung

Die Erfindung betrifft einen Türantrieb, insbesondere einen Türantrieb mit einem Stator für einen elektrischen Antrieb. Weiterhin betrifft die Erfindung einen Türantrieb mit einem elektrischen Antrieb umfassend einen solchen Stator.

Aus dem Stand der Technik ist bekannt, Gummiseile in Türantrieben vorzusehen, mit denen eine Tür im Fehlerfall angetrieben werden kann. Ein Fehlerfall liegt insbesondere dann vor, wenn ein regulärer Türantrieb die Tür nicht mehr antreiben kann.

Aus dem Stand der Technik sind weiterhin Türantriebe bekannt, die eine Redundanz aufweisen. So umfassen bekannte Türantriebe entweder zwei Motoren oder einen Motor mit einer primären Wicklung und einer sekundären Wicklung. Letzteres ist beispielsweise aus der DE 100 24 502 C1 bekannt. Hier wird ein Türantrieb mit einer ersten Wicklung betrieben, wobei im Fehlerfall eine zweite Wicklung den Antrieb übernimmt. Ähnliche Konzepte können auch der EP1688576A2, US5929549A, US4635349A oder DE102007007578A1 entnommen werden.

Die bekannten Türantriebe haben jedoch den Nachteil, dass diese einen sehr großen Bauraum benötigen. So muss bei der Verwendung von Gummiseilen eine zusätzliche Antriebsleistung abrufbar sein, um das Gummiseil zu spannen. Dies führt zu einer für den normalen Betrieb des Türantriebs nicht notwendigen großen Dimensionierung des Antriebs.

Auch entstehen durch das Spannen des Gummiseils zusätzliche ungewollte Geräusche. Sind mehrere Motoren innerhalb des Türantriebs vorgesehen, so vergrößert sich der benötigte Bauraum. Gleiches gilt für das Vorsehen einer zusätzlichen Wicklung, da die Wicklungen räumlich getrennt sein müssen, um eine gegenseitige Beeinflussung zu vermeiden.

Es ist daher Aufgabe der Erfindung einen Türantrieb mit einem Stator bereitzustellen, wobei der Stator bei einfacher und kostengünstiger Herstellung und Montage einen kleinen Bauraum benötigt und einen sicheren und zuverlässigen Betrieb ermöglicht.

Die Lösung der Aufgabe erfolgt durch die Merkmale des Anspruchs 1. Somit wird die Aufgabe gelöst durch einen Türantrieb umfassend eine Antriebseinheit, wobei die Antriebseinheit einen elektrischen Antrieb aufweist. Der elektrische Antrieb wiederum weist einen Stator auf, wobei der Stator insbesondere für einen Außenläufermotor geeignet ist. Der Stator umfasst einen Grundkörper sowie zumindest eine erste Wicklung und zumindest eine zweite Wicklung. Die erste Wicklung ist von der zweiten Wicklung unabhängig. Somit ist eine Einfehlersicherheit durch die unabhängigen Wicklungen gegeben. Dabei ist außerdem vorgesehen, dass eine Vielzahl von magnetischen Polen durch die erste Wicklung und/oder die zweite Wicklung gebildet ist. Außerdem weist der Stator eine Mittelachse auf. Der Grundkörper erstreckt sich dabei mit einer vordefinierten Höhe entlang der Mittelachse. Schließlich ist vorgesehen, dass sich die erste Wicklung und die zweite Wicklung zumindest über die vordefinierte Höhe entlang der Mittelachse erstrecken.

Die Unteransprüche haben vorteilhafte Weiterbildungen der Erfindung zum Inhalt.

Vorteilhafterweise ist eine Isolierung zwischen der ersten Wicklung und der zweiten Wicklung angebracht. Auf diese Weise ist verhindert, dass sich die erste Wicklung und die zweite Wicklung gegenseitig beeinflussen, so dass der Stator eine Einfehlersicherheit aufweist. Insbesondere ist verhindert, dass eine defekte erste Wicklung oder zweite Wicklung die jeweils andere Wicklung durch Hitzeeinwirkung beschädigt. Somit ist sichergestellt, dass selbst bei beschädigter erster Wicklung oder zweiter Wicklung die verbleibende Wicklung betriebsfähig bleibt. Besonders bevorzugt ist die Isolierung ein scheibenförmiger oder plattenförmiger Körper oder eine Folie.

Bevorzugt weist der Grundkörper eine Vielzahl von Zähnen auf, wobei jeder Zahn zumindest teilweise von der ersten Wicklung und/der von der zweiten Wicklung umwickelt ist. Auf diese Weise bildet jeder Zahn einen Pol. Die Zähne sind insbesondere gleich groß und sind vorteilhafterweise gleichmäßig angeordnet. Dadurch, dass die Zähne mit unterschiedlichen Wicklungen umwickelbar sind, ist der Stator sehr flexibel gestaltbar. Sollte der Stator eine zuvor beschriebene Isolierung umfassen, so ist insbesondere vorgesehen, dass die Isolierung zwischen jeweils zwei Zähnen angeordnet ist.

Vorteilhafterweise ist ein Zahn ausschließlich von der ersten Wicklung oder der zweiten Wicklung umwickelt. Somit ist jeder Zahn eindeutig einer Wicklung zuordenbar, entweder der ersten Wicklung oder der zweiten Wicklung. Dadurch ist eine räumliche Trennung zwischen der ersten Wicklung und der zweiten Wicklung vereinfacht, da lediglich die Zähne voneinander getrennt werden müssen.

Besonders bevorzugt ist eine erste vordefinierte Anzahl von benachbarten Zähnen mit der ersten Wicklung umwickelt und eine zweite vordefinierte Anzahl von benachbarten Zähnen mit der zweiten Wicklung. Dadurch wird die räumliche Trennung weiter vereinfacht, da lediglich Gruppen von Zähnen voneinander getrennt werden müssen.

Schließlich ist besonders vorteilhaft vorgesehen, dass die erste vordefinierte Anzahl gleich groß ist wie die zweite vordefinierte Anzahl. Somit weist der Stator eine gleichmäßige Verteilung der ersten Wicklung und der zweiten Wicklung auf. Auf diese Weise ist insbesondere ein ruhiger Motorlauf eines den Stator umfassenden elektrischen Antriebs gewährleistet.

In einer vorteilhaften Alternative ist jeder Zahn von der zweiten Wicklung umwickelt, wobei die zweite Wicklung von der ersten Wicklung umwickelt ist. Insbesondere ist eine Isolierung zwischen der ersten Wicklung und der zweiten Wicklung vorgesehen. Somit weist jeder Zahn sowohl die erste Wicklung als auch die zweite Wicklung auf.

In einer weiteren vorteilhaften Alternative ist ein erster Bereich jedes Zahns von der ersten Wicklung umwickelt, während ein zweiter Bereich jedes Zahns von der zweiten Wicklung umwickelt ist. Wiederum weist jeder Zahn sowohl die erste Wicklung als auch die zweite Wicklung auf, wobei in dieser Alternative eine räumliche Trennung der ersten Wicklung von der zweiten Wicklung verbessert ist, da die erste Wicklung und die zweite Wicklung lediglich an einer Stelle des Zahns zusammentreffen.

Schließlich ist in einer vorteilhaften Alternative vorgesehen, dass jeder Zahn gleichmäßig mit der ersten Wicklung und der zweiten Wicklung umwickelt ist. Dies wird insbesondere dadurch erreicht, dass der Zahn gleichzeitig von der ersten Wicklung und der zweiten Wicklung umwickelt wird. Somit ist eine keine räumliche Trennung zwischen erster Wicklung und zweiter Wicklung vorhanden, wodurch ein Motorlauf eines den Stator umfassenden elektrischen Antriebs optimiert ist.

Der Stator ist außerdem bevorzugt zumindest teilweise von einem Isolationskörper umgeben. Der Isolationskörper ist insbesondere ein Kunststoffkörper. Dabei ist bevorzugt vorgesehen, dass der Isolationskörper um den Stator gespritzt ist. Alternativ ist der Stator vergossen, wobei der Isolationskörper insbesondere ein Kunstharzkörper ist. Mit dem Kunstharzkörper sind bevorzugt Zwischenräume zwischen den Zähnen des Stators auffüllbar. In einer weiteren Alternative ist der Isolationskörper bevorzugt eine Kunststofffolie, mit der der Stator umwickelt ist. Durch den Isolationskörper ist eine gegenseitige Beeinflussung der ersten Wicklung und der zweiten Wicklung erschwert oder verhindert.

Der elektrische Antrieb des Türantriebs umfasst bevorzugt zusätzlich eine Achse und einen Rotor. Dabei ist vorgesehen, dass der Stator fest mit der Achse verbunden ist. Weiterhin ist vorgesehen, dass der Rotor rotierbar auf der Achse gelagert ist und eine Glockenform aufweist, wobei die Glocke den Stator umgibt.

Besonders vorteilhaft weist der elektrische Antrieb einen ersten Stator und einen zweiten Stator auf. Dabei umgibt der Rotor den ersten Stator und den zweiten Stator. Somit ist eine Einfehlersicherheit vorhanden. Sollte der erste Stator oder der zweite Stator ausfallen, so bleibt der elektrische Antrieb dennoch aufgrund des verbleibenden Stators funktionsfähig.

Vorteilhafterweise weist der elektrische Antrieb eine redundante Steuereinheit auf. Dabei sind die erste Wicklung und die zweite Wicklung mit der redundanten Steuereinheit verbunden. Alternativ umfasst der elektrische Antrieb eine erste Steuereinheit und eine zweite Steuereinheit. Dabei ist vorgesehen, dass die erste Wicklung mit der ersten Steuereinheit und die zweite Wicklung mit der zweiten Steuereinheit verbunden ist.

Insbesondere weist der elektrische Antrieb ein Netzteil auf, mit den elektrische Energie an den Stator abgebbar ist, die aus einem Stromnetz entnehmbar ist. Weiterhin weist der elektrische Antrieb bevorzugt einen Energiespeicher auf, mit dem elektrische Energie speicherbar ist. Der Energiespeicher ist bevorzugt ein Akkumulator oder eine Batterie oder ein Kondensator. Der Energiespeicher und das Netzteil sind bevorzugt mit der redundanten Steuereinheit verbunden. Alternativ ist das Netzteil mit der ersten Steuereinheit und der Energiespeicher mit der zweiten Steuereinheit verbunden. Somit ist sichergestellt, dass der Stator zumindest über eine der beiden Wicklungen ansteuerbar ist, selbst wenn aus dem Stromnetzt keine Energie entnehmbar ist und das Netzteil somit keine Energie liefert. In diesem Fall ist elektrische Energie aus dem Energiespeicher entnehmbar, um den Stator und damit den elektrischen Antrieb zu betreiben.

Weiterhin ist bevorzugt vorgesehen, dass die redundante Steuereinheit oder die erste Steuereinheit und/oder die zweite Steuereinheit eingerichtet sind, eine sensorlose Kommutierung auszuführen. Dies geschieht insbesondere durch das Erfassen einer rückinduzierten Spannung oder durch das Erfassen einer Verstimmung einer aufgebrachten hochfrequenten Trägerfrequenz. Die sensorlose Kommutierung erlaubt einen sicheren und zuverlässigen Betrieb des elektrischen Antriebs auch bei Ausfall oder Störung von vorhandenen Magnetsensoren, da insbesondere durch die zuvor genannten Maßnahmen ein Erfassen einer Position des Rotors relativ zu dem Stator ermöglicht ist.

Vorteilhafterweise sind die redundante Steuereinheit oder die erste Steuereinheit und/oder die zweite Steuereinheit eingerichtet, für einen Betrieb des elektrischen Antriebs sowohl die erste Wicklung als auch die zweite Wicklung anzusteuern. Somit findet ein Betrieb stets unter Verwendung der ersten Wicklung und der zweiten Wicklung statt. Dadurch ist eine kompakte Auslegung des elektrischen Antriebs ermöglicht. Sollte die erste Wicklung oder die zweite Wicklung ausfallen, so ist der elektrische Antrieb weiterhin mit der verbleibenden Wicklung betreibbar. Insbesondere ist vorgesehen, dass die verbleibende Wicklung kurzzeitig überlastet wird, um den Betrieb des elektrischen Antriebs kurzzeitig sicherzustellen. Dies ist insbesondere für den kurzzeitigen Antrieb von Fluchttüren und/oder Rettungstüren ausreichend.

Die Antriebseinheit des Türantriebs umfasst zumindest einen elektrischen Antrieb. Weiterhin umfasst die Antriebseinheit einen Abtrieb, der von dem elektrischen Antrieb antreibbar ist. Dazu ist der Abtrieb insbesondere mit dem Übertragungselement des Rotors des elektrischen Antriebs verbindbar. Der Abtrieb wiederum ist insbesondere mit einer Übertragungsvorrichtung zur Bewegung von Türflügeln verbindbar. Somit ist es mittels der Antriebseinheit möglich, die Türflügel zu bewegen.

Bevorzugt umfasst die Antriebseinheit zumindest zwei elektrische Antriebe. Dabei sind die elektrischen Antriebe über ein Koppelelement, insbesondere über eine Zahnradstufe, aneinander gekoppelt. Somit ist eine Einfehlersicherheit gewährleistet, wodurch die Antriebseinheit selbst bei Ausfall eines der elektrischen Antriebe weiterhin funktionsfähig bleibt. Daher eignet sich die Antriebseinheit insbesondere zur Ansteuerung von Rettungstüren und/oder Fluchttüren.

In obiger Beschreibung sind stets zwei unabhängige Wicklungen erläutert. Im Sinne der Erfindung ist es ebenso möglich, drei oder mehrere unabhängige Wicklungen vorzusehen.

Die Erfindung wird nun anhand von Ausführungsbeispielen näher beschrieben. Dabei zeigen:
- Fig. 1: eine schematische Darstellung eines Stators des Türantriebs gemäß einem Ausführungsbeispiel der Erfindung,
- Fig. 2: eine schematische Darstellung von drei Alternativen des Stators des Türantriebs die nicht der beanspruchten Erfindung gehören,
- Fig. 3: eine schematische Darstellung der ersten Alternative des Stators des Türantriebs die nicht der beanspruchten Erfindung gehört,
- Fig. 4: eine schematische Darstellung der zweiten Alternative des Stators des Türantriebs die nicht der beanspruchten Erfindung gehört,
- Fig. 5: eine schematische Darstellung der dritten Alternative des Stators des Türantriebs die nicht der beanspruchten Erfindung gehört,
- Fig. 6: eine schematische Darstellung einer ersten Alternative einer Isolierung für den Stator des Türantriebs gemäß dem Ausführungsbeispiel der Erfindung,
- Fig. 7: eine schematische Darstellung einer zweiten Alternative der Isolierung für den Stator des Türantriebs gemäß dem Ausführungsbeispiel der Erfindung,
- Fig. 8: eine schematische Darstellung einer dritten Alternative der Isolierung für den Stator des Türantriebs gemäß dem Ausführungsbeispiel der Erfindung,
- Fig. 9: eine Detailansicht von Fig. 8,
- Fig. 10: eine schematische Darstellung einer vierten Alternative der Isolierung für den Stator des Türantriebs gemäß dem Ausführungsbeispiel der Erfindung,
- Fig. 11: eine schematische Darstellung einer fünften Alternative der Isolierung für den Stator des Türantriebs gemäß dem Ausführungsbeispiel der Erfindung,
- Fig. 12: eine Detailansicht von Fig. 11,
- Fig. 13: eine schematische Darstellung einer ersten Alternative einer Verschaltung des Stators des Türantriebs gemäß dem Ausführungsbeispiel der Erfindung,
- Fig. 14: eine schematische Darstellung einer zweiten Alternative einer Verschaltung des Stators des Türantriebs gemäß dem Ausführungsbeispiel der Erfindung,
- Fig. 15: eine schematische Darstellung einer ersten Alternative des elektrischen Antriebs des Türantriebs gemäß einem Ausführungsbeispiel der Erfindung,
- Fig. 16: eine schematische Darstellung einer zweiten Alternative des elektrischen Antriebs des Türantriebs gemäß dem Ausführungsbeispiel der Erfindung,
- Fig. 17: eine schematische Darstellung einer dritten Alternative des elektrischen Antriebs des Türantriebs gemäß dem Ausführungsbeispiel der Erfindung, und
- Fig. 18: eine schematische Übersicht eines Türantriebs mit einer Antriebseinheit gemäß dem Ausführungsbeispiel der Erfindung.

### Ausführungsbeispiele der Erfindung

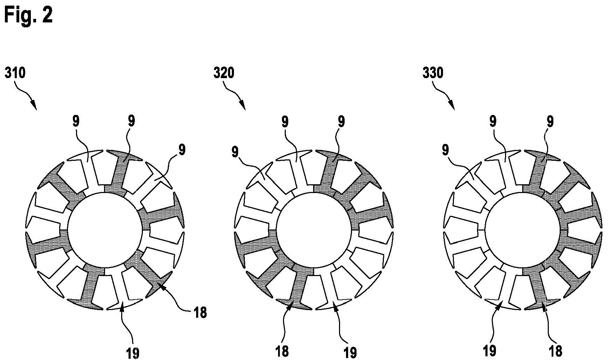

Im Folgenden werden verschiedene Ausführungsbeispiele der Erfindung beschrieben. Die Ausführungsbeispiele zeigen jeweils verschiedene Vorteile der Erfindung und sind bevorzugt miteinander kombinierbar. Die Ausführungsbeispiele der Figuren 2-5 zeigen Ausführungsformen die nicht zur beanspruchten Erfindung gehören.

### Stator

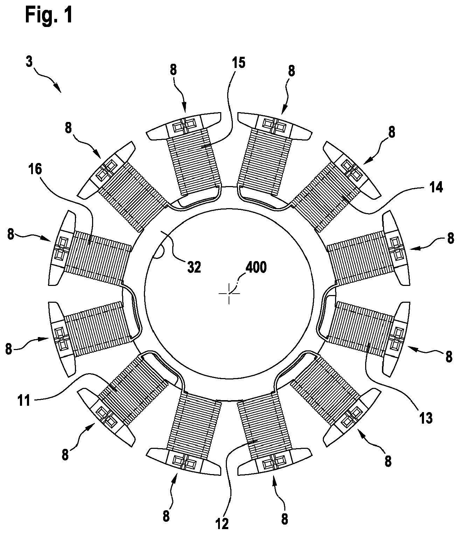

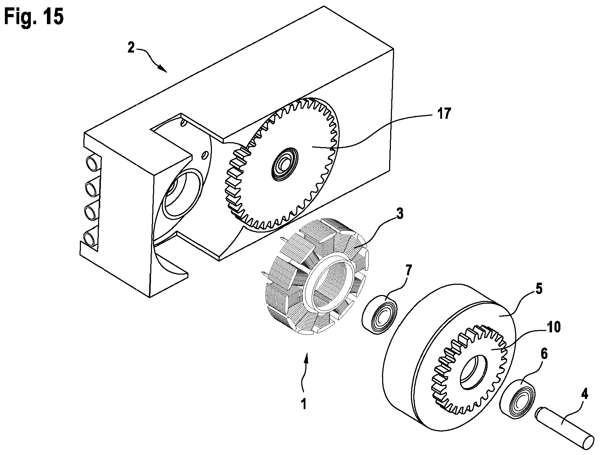

Fig. 1 zeigt einen Stator 3 eines Türantriebs 100 gemäß einem Ausführungsbeispiel der Erfindung. Der Stator 3 ist insbesondere Teil eines elektrischen Antriebs 1. Der elektrische Antrieb 1 wird mit Bezug auf Fig. 15 genauer beschrieben.

Der Stator 3 ist insbesondere scheibenförmig und umfasst einen Grundkörper 32, der sich rotationssymmetrisch um eine Mittelachse 400 erstreckt. Weiterhin weist der Grundkörper 32 eine Vielzahl von Zähnen 9 auf. Die Zähne 9 sind gleichmäßig an dem Umfang des Grundkörpers 32 angeordnet. Jeder der Zähne 9 bildet einen magnetischen Pol 8, indem der Zahn 9 mit einer ersten Wicklung 18 oder einer zweiten Wicklung 19 umwickelt ist. Dabei ist sowohl die erste Wicklung 18 als auch die zweite Wicklung 19 derart an den Zähnen 9 angeordnet, dass mindestens eine gesamte Höhe des Grundkörpers 32 entlang der Mittelachse umwickelt ist. Dies bedeutet, dass jede imaginäre Ebene, die senkrecht zu der Mittelachse 400 durch den Stator 3 verläuft sowohl die erste Wicklung 18 als auch die zweite Wicklung 19 schneidet.

Die erste Wicklung 18 und die zweite Wicklung 19 sind insbesondere Drahtumwicklungen der Zähne 9, so dass bei Beaufschlagung der ersten Wicklung 18 und/oder der zweiten Wicklung 19 mit elektrischem Strom ein Magnetfeld erzeugbar ist.

Der Stator 3 ist insbesondere dreisträngig. Somit weist die erste Wicklung 18 einen ersten Strang 11, einen zweiten Strang 12 und einen dritten Strang 13 auf, während die zweite Wicklung 19 ebenso einen ersten Strang 14, einen zweiten Strang 15 und einen dritten Strang 16 aufweist. Die erste Wicklung 18 und die zweite Wicklung 19 sind insbesondere unabhängig voneinander ausgebildet. Dies bedeutet, dass bei Ausfall einer Wicklung, beispielsweise durch Kurzschluss, der Stator 3 dennoch betriebsfähig bleibt.

In dem in Fig. 1 dargestellten Ausführungsbeispiel weist der Stator 3 eine Gruppe von zwei benachbarten Zähnen 9 auf, die jeweils mit derselben Wicklung versehen sind. Somit weisen zwei benachbarte Zähne 9 den ersten Strang 11 der ersten Wicklung 18 auf, zwei weitere benachbarte Zähne 9 den zweiten Strang 12 der ersten Wicklung 18 und wiederum zwei weitere benachbarte Zähne 9 den dritten Strang 13 der ersten Wicklung 18. Genauso weisen zwei benachbarte Zähne 9 den ersten Strang 14 der zweiten Wicklung 19 auf, zwei weitere benachbarte Zähne 9 den zweiten Strang 15 der zweiten Wicklung 19 und wiederum zwei weitere benachbarte Zähne 9 den dritten Strang 16 der zweiten Wicklung 19. Somit weist der Stator 3 zwölf Zähne 9 auf, wobei sich die erste Wicklung 18 und die zweite Wicklung 19 gleichmäßig über die Zähne 9 verteilen. Auf diese Weise treten niedrige Rastmomente und wenige Drehmomentwelligkeiten beim Betrieb des elektrischen Antriebs auf.

Fig. 2 zeigt weitere Alternativen, wie die erste Wicklung 18 und die zweite Wicklung 19 auf die Zähne 9 des Stators 3 verteilt werden können. So sind ein erstes Wicklungsschema 310, ein zweites Wicklungsschema 320 und ein drittes Wicklungsschema 330 dargestellt. Bei dem ersten Wicklungsschema 310 sind die Zähne 9 abwechselnd mit der ersten Wicklung 18 und der zweiten Wicklung 19 umwickelt. Bei dem zweiten Wicklungsschema 320 sind jeweils drei benachbarte Zähne abwechselnd mit der ersten Wicklung 18 und der zweiten Wicklung 19 umwickelt. Beim dritten Wicklungsschema 330 ist eine Hälfte des Stator 3, das heißt sechs benachbarte Zähne 9, mit der ersten Wicklung 18 umwickelt, während die andere Hälfte, das heißt die verbleibenden sechs Zähne 9, mit der zweiten Wicklung 19 umwickelt ist.

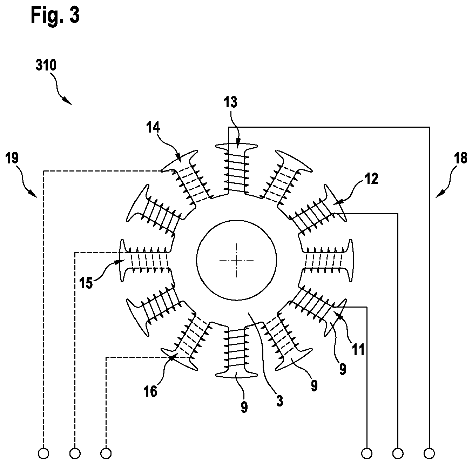

Das erste Wicklungsschema 310 ist in Fig. 3 detailliert dargestellt. Dabei ist ersichtlich, dass der Zahn 9, der mit dem ersten Strang 14 der zweiten Wicklung 19 umwickelt ist benachbart zu dem Zahn 9 ist, der mit dem ersten Strang 11 der ersten Wicklung 18 umwickelt ist. Somit sind der erste Strang 11, der zweite Strang 12 und der dritte Strang 13 der ersten Wicklung 18 mit dem ersten Strang 14, dem zweiten Strang 15 und dem dritten Strang 16 der zweiten Wicklung 19 ineinander verschachtelt angeordnet.

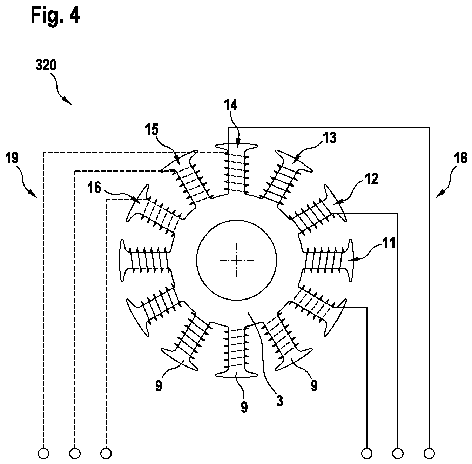

Das zweite Wicklungsschema 320 ist in Fig. 4 detailliert dargestellt. Das zweite Wicklungsschema 320 sieht vor, dass auf eine Anordnung von drei benachbarten Zähnen 9, die mit dem ersten Strang 11, dem zweiten Strang 12 und dem dritten Strang 13 der ersten Wicklung 18 umwickelt sind, eine Anordnung von drei benachbarten Zähnen folgt, die mit dem ersten Strang 14, dem zweiten Strang 15 und dem dritten Strang 16 der zweiten Wicklung 19 umwickelt sind. Somit sind die erste Wicklung 18 und die zweite Wicklung 19 räumlich voneinander getrennt, so dass eine Beeinflussung erschwert ist. Die räumliche Trennung verhindert insbesondere, dass ein Kurzschluss in der ersten Wicklung 18 oder in der zweiten Wicklung 19 durch Hitzeentwicklung die jeweils andere Wicklung beeinträchtigt. Daher ist die Ausfallwahrscheinlichkeit des Stators 3 selbst bei einer defekten ersten Wicklung 18 oder zweiten Wicklung 19 minimiert.

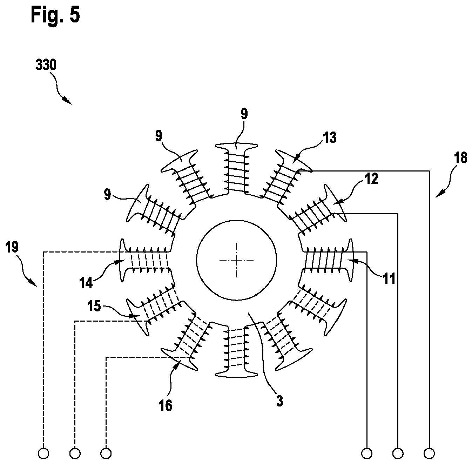

Eine weitere Verbesserung der räumlichen Trennung ist mit dem in Fig. 5 dargestellten dritten Wicklungsschema 330 realisiert. Hier ist eine Hälfte des Stators 3 mit der ersten Wicklung 18 umwickelt, während die zweite Hälfte des Stators 3 mit der zweiten Wicklung 19 umwickelt ist. Somit ist eine optimale räumliche Trennung vorhanden, da lediglich zwei Stellen verbleiben, an denen die erste Wicklung 18 auf die zweite Wicklung 19 trifft.

### Isolierung

Um zu verhindern, dass eine gegenseitige Beeinflussung der ersten Wicklung 18 und der zweiten Wicklung 19 erfolgen kann, ist eine räumliche Trennung zwischen der ersten Wicklung 18 und der zweiten Wicklung 19 vorgesehen. Insbesondere sind unterschiedliche Arten von Isolierungen angebracht, wobei nachfolgend verschiedene Alternativen der Isolierung dargestellt sind. Aufgrund der Isolierung ist verhindert, dass ein Defekt in der ersten Wicklung 18 oder der zweiten Wicklung 19 auf die jeweils andere, noch intakte, Wicklung übergreift. Somit liegt eine Einfehlersicherheit vor.

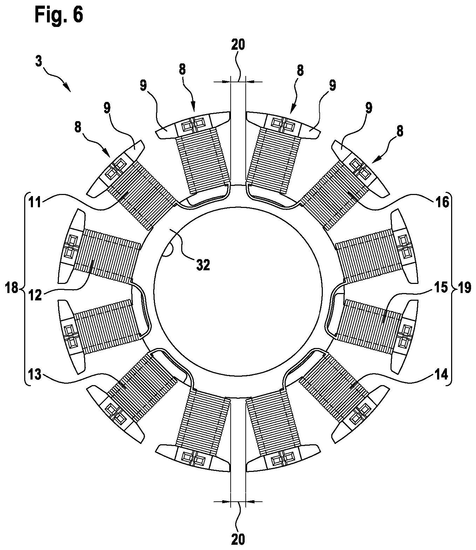

Fig. 6 zeigt eine erste Alternative der Isolierung. Dabei ist der in Fig. 1 gezeigte Stator 3 dargestellt. Zwischen der ersten Wicklung 18 und der zweiten Wicklung 19 ist ein Luftspalt 20 vorhanden. Die Dicke des Luftspaltes 20 beträgt zumindest einen Millimeter. Der Luftspalt 20 ist an jeder Stelle vorhanden, an der die erste Wicklung 18 auf die zweite Wicklung 19 trifft.

Durch den Luftspalt 20 ist eine Isolierung vorhanden, die verhindert, dass sich die erste Wicklung 18 und die zweite Wicklung 19 gegenseitig beeinflussen. Insbesondere ist verhindert, dass durch eine defekte erste Wicklung 18 oder zweite Wicklung 19 erzeugte Wärme an die intakte Wicklung übertragen wird, sodass eine Beschädigung der intakten Wicklung durch die Erwärmung ausgeschlossen ist.

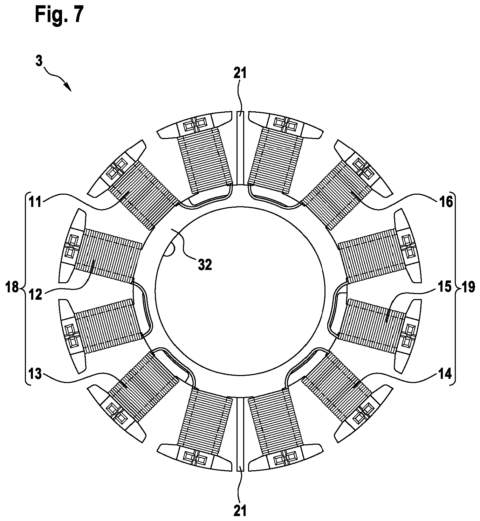

Eine zweite Alternative ist in Fig. 7 gezeigt. Wiederum zeigt Fig. 7 den Stator 3 aus Fig. 1. Der Stator 3 weist zusätzlich ein erstes Isolationselement 21 auf, das jeweils zwischen der ersten Wicklung 18 und der zweiten Wicklung 19 angebracht ist. Ebenso wie die Zähne 9 des Stators 3 erstreckt sich das erste Isolationselement 21 radial nach außen, wobei ein radial äußeres Ende des ersten Isolationselements 21 auf einem imaginären Kreis liegt, der von den radial äußeren Enden der Zähne 9 gebildet ist. Somit liegt eine vollständige Isolation oder Trennung von zwei benachbarten Zähnen 9 vor.

Das erste Isolationselement 21 ist vorteilhafterweise aus Kunststoff gefertigt und an den Stator 3 angespritzt oder nachträglich angebracht. Weiterhin ist vorgesehen, dass das erste Isolationselement 21 hitzebeständig ist, insbesondere Temperaturen von zumindest 180°C widersteht. Durch das erste Isolationselement 21 sind erste Wicklung 18 und zweite Wicklung 19 voneinander getrennt, so dass eine Beeinflussung ausgeschlossen ist.

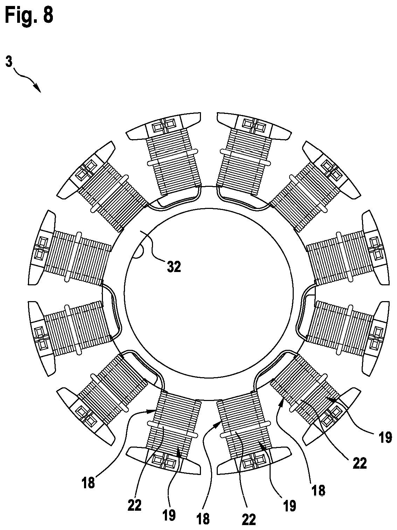

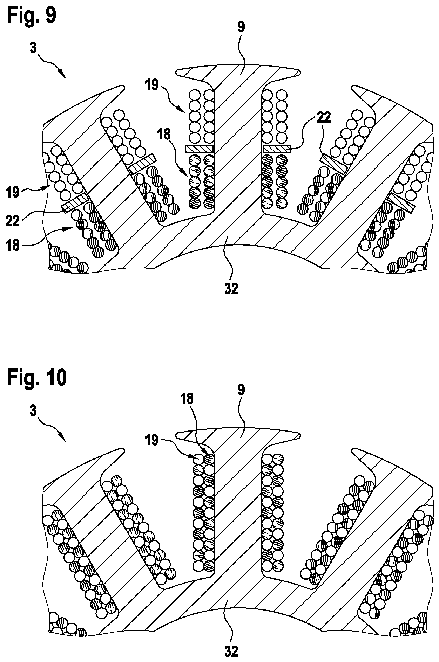

Eine dritte Alternative ist in den Fig. 8 und 9 gezeigt. Der in Fig. 8 und 9 gezeigte Stator 3 weist an jedem Zahn 9 ein zweites Isolationselement 22 auf. Das zweite Isolationselement 22 ist senkrecht zu einer Mittelachse eines Zahns 9 angeordnet und verläuft vollständig um den Zahn 9. Somit trennt das zweite Isolationselement 22 den Zahn 9 in einen ersten Bereich und in einen zweiten Bereich, wobei der erste Bereich ein radial innerer Bereich ist und der zweite Bereich ein radial äußerer Bereich. Bevorzugt unterscheidet sich das zweite Isolationselement 22 lediglich in seiner Anordnung an dem Grundkörper 32 von dem ersten Isolationselement 21, nicht jedoch in den Materialeigenschaften.

Der erste Bereich ist mit der ersten Wicklung 18 umwickelt, während der zweite Bereich mit der zweiten Wicklung 19 umwickelt ist. Da das zweite Isolationselement 22 den ersten Bereich von dem zweiten Bereich trennt, ist auch die erste Wicklung 18 von der zweiten Wicklung 19 räumlich getrennt. Dennoch ist jeder Zahn 9 sowohl mit der ersten Wicklung 18 als auch mit der zweiten Wicklung 19 umwickelt.

Fig. 10 zeigt eine vierte Alternative. Der Stator 3 weist bei der Isolierung nach der vierten Alternative eine kombinierte Wicklung auf, die aus der ersten Wicklung 18 und der zweiten Wicklung 19 besteht. Die einzelnen Drähte der ersten Wicklung 18 und der zweiten Wicklung 19 sind dabei gegeneinander isoliert. Dabei sind die erste Wicklung 18 und die zweite Wicklung 19 temperaturfest isoliert, so dass die Isolierung eine elektrische Trennung sicherstellt. Die vierte Alternative der Isolierung erlaubt eine homogene Wicklung, da jeder Zahn 9 gleichmäßig mit der ersten Wicklung 18 und der zweiten Wicklung 19 umwickelt ist. Dies führt zu einem gleichmäßigen und ruhigen Lauf des elektrischen Antriebs 1.

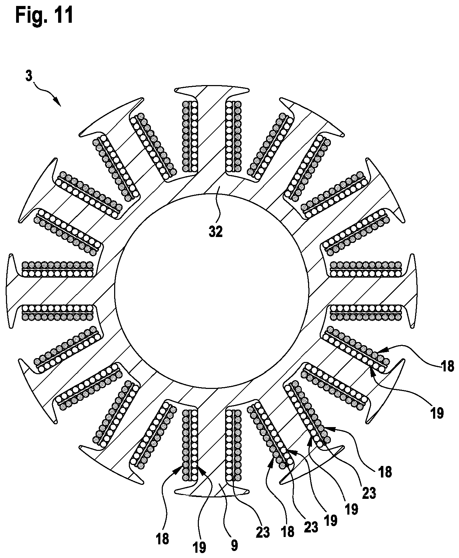

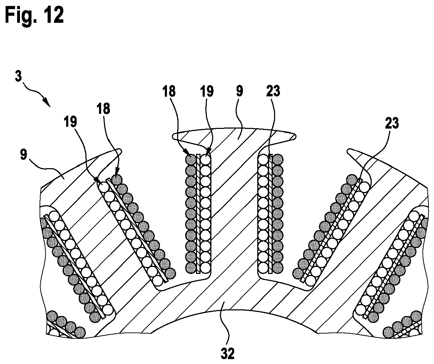

Die Fig. 11 und 12 zeigen eine fünfte Alternative der Isolierung. Dazu ist zunächst die zweite Umwicklung 19 auf jeden Zahn 9 des Stators 3 aufgebracht. Auf die zweite Umwicklung 19 ist ein drittes Isolationselement 23 aufgetragen, wobei das dritte Isolationselement 23 eine hitzebeständige Folie und/oder eine Lackierung und/oder eine Umspritzung ist. Insbesondere weist das dritte Isolationselement 23 dieselben Materialeigenschaften auf wie das erste Isolationselement 21 und/oder das zweite Isolationselement 22.

Auf das dritte Isolationselement 23 ist die erste Umwicklung 18 aufgebracht. Die erste Umwicklung 18 erstreckt sich daher insbesondere über denselben Bereich des Zahns 9, über den sich auch die zweite Umwicklung 19 erstreckt. Dies führt zu einem sehr homogenen und ruhigen Lauf des elektrischen Antriebs. Durch das dritte Isolationselement 23 ist dennoch eine räumliche Trennung zwischen erster Wicklung 18 und zweiter Wicklung 19 gegeben.

Eine weitere Alternative der Isolierung ist das vollständige Ausgießen des Stators 3, insbesondere mit Kunstharz. Durch das Ausgießen werden Zwischenräume zwischen den Zähnen 9 mit einer Vergussmasse aufgefüllt. Dadurch ist eine Isolation und eine Trennung von erster Wicklung 18 und zweiter Wicklung 19 gewährleistet. Ebenso ist es möglich, eine radiale Außenseite des Stators 3 mit einer Folie zu umwickeln oder mit einem Kunststoff zu umspritzen, um eine Isolationswirkung zu erhalten. Durch beide Maßnahmen wird verhindert, dass ein Lack des Drahts der ersten Wicklung 18 oder der zweiten Wicklung 19 aus dem Stator 3 herausläuft und somit einen den Stator 3 umfassenden elektrischen Antrieb 1 (vgl. Fig. 15) blockiert.

### Ansteuerung

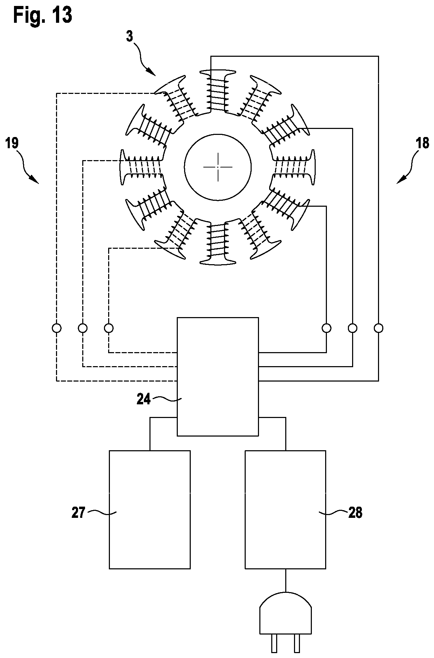

Fig. 13 zeigt eine erste Alternative für die Ansteuerung des Stators 3. Somit zeigt Fig. 13 einen Ausschnitt aus dem elektrischen Antrieb 1. Die erste Wicklung 18 und die zweite Wicklung 19 sind jeweils mit einer redundanten Steuereinheit 24 verbunden. Die redundante Steuereinheit 24 steuert somit den Stator 3 über die erste Wicklung 18 und über die zweite Wicklung 19 an.

Die redundante Steuereinheit 24 wird sowohl von einem Energiespeicher 27 als auch von einem Netzteil 28 mit elektrischer Energie versorgt. Sollte das Netzteil 28, beispielsweise aufgrund einer Netzstörung, keine elektrische Energie mehr liefern, so ist die redundante Steuereinheit 24 weiterhin über den Energiespeicher 27 mit elektrischer Energie versorgbar. Der Energiespeicher 27 ist insbesondere ein elektrischer Energiespeicher, bevorzugt eine Batterie oder ein Akkumulator oder ein Kondensator.

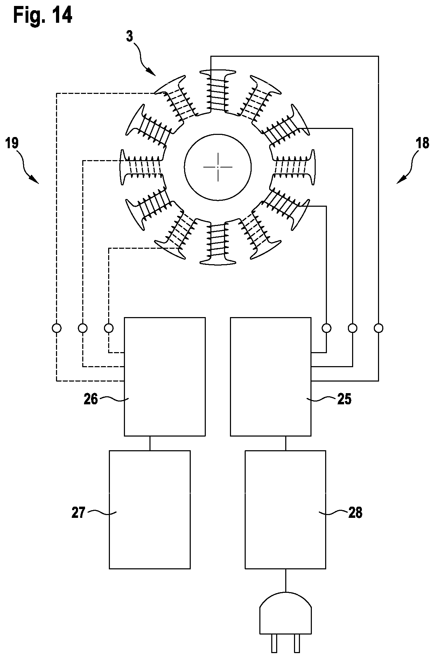

Eine zweite Alternative für die Ansteuerung des Stators 3 ist in Fig. 14 gezeigt. Hier ist die erste Wicklung 18 mit einer ersten Steuereinheit 25 und die zweite Wicklung 19 mit einer zweiten Steuereinheit 26 verbunden. Somit ist auch die Ansteuerung der ersten Wicklung 18 und der zweiten Wicklung 19 getrennt.

Die erste Steuereinheit 25 ist mit dem Netzteil 28 verbunden, während die zweite Steuereinheit 26 mit dem Energiespeicher 27 verbunden ist. Dadurch ist jede Steuereinheit, d.h. die erste Steuereinheit 25 und die zweite Steuereinheit 26, autark mit Energie versorgt. Die erste Steuereinheit 25 ist bevorzugt mit der zweiten Steuereinheit 26 verbunden, so dass die zweite Steuereinheit 26 einen Ausfall der ersten Steuereinheit 25 feststellen kann. Ein Ausfall der ersten Steuereinheit 25 kann beispielsweise in einer Störung des Netzes begründet sein, so dass das Netzteil 28 keine Energie mehr an die erste Steuereinheit 25 liefert. Somit ist der Stator 3 über die erste Wicklung 18 nicht mehr ansteuerbar. Die zweite Steuereinheit 26 liefert dann elektrische Energie aus dem Energiespeicher 27 an die zweite Wicklung 19. Das bedeutet, dass der Stator 3 über die zweite Wicklung 19 weiterhin ansteuerbar ist, so dass der Stator 3 auch bei einem Netzausfall oder einer Netzstörung weiterhin betreibbar ist.

Außerdem ist bevorzugt vorgesehen, dass die erste Steuereinheit 25 und/oder die zweite Steuereinheit 26 eingerichtet ist, eine Kommutierung sensorlos vorzunehmen. Eine sensorlose Kommutierung ist insbesondere dadurch möglich, dass eine Position des Rotors 5 (vgl. Fig. 15) relativ zu dem Stator 3 durch eine rückinduzierte Spannung des elektrischen Antriebs 1 bestimmbar ist. Alternativ oder zusätzlich wird eine hochfrequente Trägerfrequenz auf die erste Wicklung 18 und/oder auf die zweite Wicklung 19 aufgebracht. Die hochfrequente Trägerfrequenz wird durch den elektrischen Antrieb 1 (vgl. Fig. 15) verstimmt, wobei die Verstimmung charakteristisch für eine gewisse relative Position des Rotors 5 relativ zu dem Stator 3 ist.

Auf diese Weise ist es nicht notwendig, Magnetsensoren zur Bestimmung der Position des Rotors 5 vorzusehen. Dies bedeutet auch, dass ein Versagen von Magnetsensoren nicht zum Versagen des elektrischen Antriebs 1 führt. Weiterhin ist vorteilhaft, dass die möglichen Fehlerquellen bei Fertigung und Montage des elektrischen Antriebs 1 reduziert sind.

### Antriebseinheit

Fig. 15 zeigt eine schematische Darstellung einer ersten Alternative einer Antriebseinheit 2 des Türantriebs 100 gemäß einem Ausführungsbeispiel der Erfindung. Die Antriebseinheit 2 umfasst einen elektrischen Antrieb 1, der elektrische Energie in mechanische Energie umwandelt. Der elektrische Antrieb 1 ist bevorzugt ein Außenläufer-Elektromotor, insbesondere ein bürstenloser Elektromotor. Beispielsweise wird der Elektromotor mit Gleichspannung betrieben.

Der elektrische Antrieb 1 umfasst einen Stator 3, einen Rotor 5 und eine Achse 4. Somit umfasst der elektrische Antrieb 1 insbesondere keine Welle, wodurch die Montage des elektrischen Antriebs 1 sehr einfach ist. So ist insbesondere aus Fig. 15 ersichtlich, dass eine Montage des elektrischen Antriebs 1 von lediglich einer Seite durchführbar ist.

Der Stator 3 wird von einem Gehäuse 8 aufgenommen. Die Achse 4 ist ebenfalls in dem Gehäuse 8 verankert, wobei die Achse 4 insbesondere in das Gehäuse 8 eingepresst ist. Der Rotor 5 ist auf der Achse 4 gelagert, wobei in Fig. 15 beispielhaft ein erstes Kugellager 6 und ein zweites Kugellager 7 verwendet werden.

Der Rotor 5 weist eine Glockenform auf, so dass der Rotor 5 den Stator 3 umgibt. Außerdem umfasst der Rotor 5 ein Übertragungselement 10, mit dem Leistung von dem elektrischen Antrieb 1 abgebbar ist.

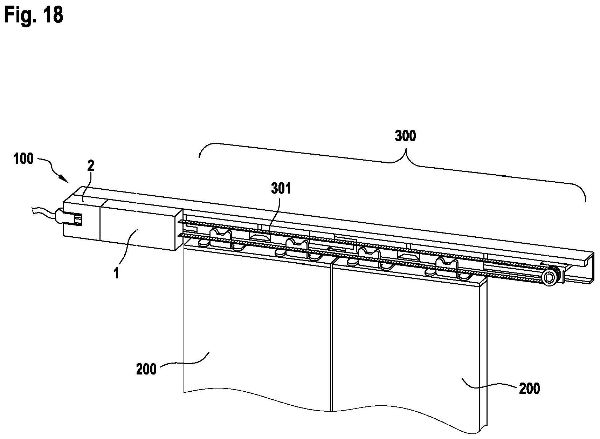

Der elektrische Antrieb 1 ist über das Übertragungselement 10 mit einem Abtrieb 17 verbunden. Der Abtrieb 17 ist insbesondere mit einem Riementrieb 301 eines Türantriebs 100 (vgl. Fig. 18) verbindbar. Somit ist Energie von dem elektrischen Antrieb 1 über das Übertragungselement 10 auf den Abtrieb 17 übertragbar. Von dem Abtrieb 17 ist die Energie wiederum auf den Riementrieb 301 übertragbar, so dass mit der Antriebseinheit 2 die zum Bewegen von Türflügeln 200 notwendige Energie bereitstellbar ist.

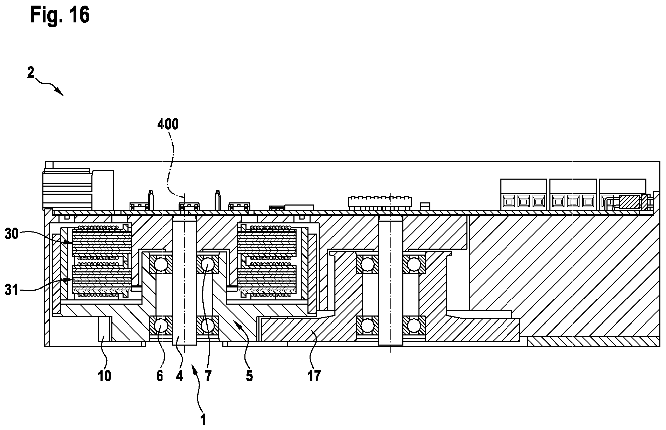

Fig. 16 zeigt eine zweite Alternative der Antriebseinheit 2. Dabei zeigen gleiche Bezugszeichen gleiche oder funktional gleiche Bauteile wie in Fig. 15. In der zweiten Alternative weist der elektrische Antrieb 1 im Unterschied zur ersten Alternative zwei Statoren auf. So sind ein erster Stator 30 und ein zweiter Stator 31 übereinander gestapelt angeordnet. Sowohl der erste Stator 30 als auch der zweite Stator 31 sind ein Stator 3 wie zuvor beschrieben.

Durch den ersten Stator 30 und den zweiten Stator 31 ist einerseits ein hohes Drehmoment sichergestellt, das abgegeben werden kann, wenn sowohl der erste Stator 30 als auch der zweite Stator 31 den Rotor 5 antreiben. Andererseits ist eine hohe Ausfallsicherheit des elektrischen Antriebs 1 gewährleistet, da der elektrische Antrieb 1 bei Ausfall des ersten Stators 30 oder des zweiten Stators 31 dennoch weiter betreibbar ist. Damit ist die Antriebseinheit 2 der zweiten Alternative insbesondere für den Antrieb von Fluchttüren und/oder Rettungstüren geeignet. Wie zuvor beschrieben ist selbst bei Ausfall eines Stators 30, 31 der elektrische Antrieb 1 weiterhin betreibbar, so dass die Fluchttür und/oder die Rettungstür weiterhin angetrieben werden kann.

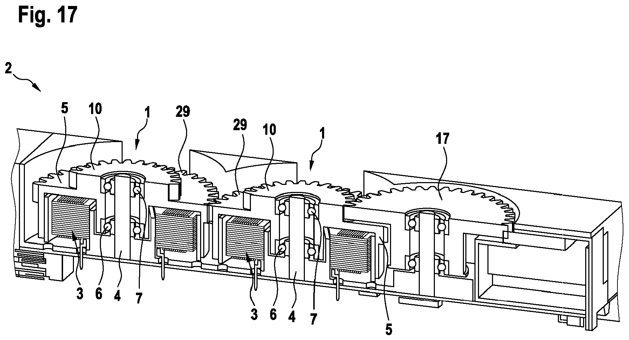

Fig. 17 zeigt eine dritte Alternative der Antriebseinheit 2. Wiederum zeigen gleiche Bezugszeichen gleiche oder funktional gleiche Bauteile wie in der ersten Alternative und der zweiten Alternative. In der dritten Alternative umfasst die Antriebseinheit 2 zwei elektrische Antrieb 1. Die elektrischen Antriebe 1 sind insbesondere identisch. Die in Fig. 17 dargestellte Alternative zeigt, dass jeder elektrische Antrieb 1 einen Stator 3 aufweist, wobei ebenso vorgesehen ist, dass jeder elektrische Antrieb 1 einen ersten Stator 30 und einen zweiten Stator 31 umfasst.

Die elektrischen Antriebe 1 weisen jeweils ein Koppelelement 29 auf, mit dem die elektrischen Antriebe 1 aneinander koppelbar sind. Das Koppelelement 29 ist insbesondere ein Zahnrad. In der dargestellten dritten Alternative ist das Koppelelement 29 eine Verzahnung, die in den jeweiligen Rotor 5 der elektrischen Antriebe 1 eingebracht ist. Auf diese Weise lässt sich Rotationsenergie zwischen den elektrischen Antrieben 1 übertragen. Durch die Kopplung der elektrischen Antriebe 1 steht während eines Normalbetriebs, in dem beide elektrischen Antriebe 1 verwendet werden, ein hohes Drehmoment zur Verfügung, das auf den Abtrieb 17 übertragbar ist. Fällt einer der elektrischen Antriebe 1 aus, so ist mit dem verbleibenden elektrischen Antrieb 1 weiterhin ein Drehmoment erzeugbar und an den Abtrieb 17 abgebbar. Somit ist die Antriebseinheit 2 der dritten Alternative insbesondere für den Antrieb von Fluchttüren und/oder Rettungstüren geeignet, da selbst bei Ausfall eines elektrischen Antriebs 1 die Fluchttür und/oder die Rettungstür weiterhin angetrieben werden kann.

### Überblick über den Türantrieb

Fig. 18 zeigt eine schematische Darstellung eines Türantriebs 100 mit einer Antriebseinheit 2 gemäß dem Ausführungsbeispiel der Erfindung. Mit der Antriebseinheit 2 ist elektrische Energie in mechanische Energie umwandelbar. Zur Übertragung der mechanischen Energie weist der Türantrieb 100 eine Übertragungsvorrichtung 300 auf, die mit der Antriebseinheit 2 wirkverbunden ist. In dem gezeigten Ausführungsbeispiel umfasst die Übertragungsvorrichtung 300 einen Riementrieb 301, wobei andere Ausgestaltungen ebenso möglich sind.

Der Riementrieb 301 der Übertragungsvorrichtung 300 erlaubt ein bewegen von Türflügeln 200. Insbesondere werden die Türflügel 200 linear voneinander weg und linear aufeinander zu bewegt, um ein Öffnen und Schließen einer von den Türflügeln 200 gebildeten Tür zu realisieren. Zum Bewegen der Türflügel 200 ist vorgesehen, dass die Antriebseinheit 2 elektrische Energie von einem Netzteil 28 und/oder einem Energiespeicher 27 bezieht und die elektrische Energie mittels des elektrischen Antriebs 1 in mechanische Energie wandelt. Die mechanische Energie wird von der Antriebseinheit 2 auf die Übertragungsvorrichtung 300 übertragen, die wiederum die mechanische Energie in Bewegungsenergie der Türflügel 200 umwandelt. Mit der Bewegungsenergie der Türflügel 200 ist die Türe öffenbar und schließbar.

In dem in Fig. 18 gezeigten Ausführungsbeispiel dient der Türantrieb 100 zum Öffnen und Schließen einer Schiebetür. Dabei ist erfindungsgemäß ebenso vorgesehen, dass der Türantrieb 100 zum Öffnen und Schließen anderer Türarten verwendbar ist, auch wenn dies nicht explizit beschrieben ist.

Die zuvor beschriebenen Ausführungsbeispiele der Antriebseinheit 2 des Türantriebs 100 und des Stators 3 des Türantriebs 100 sind insbesondere mit dem gezeigten Türantrieb 100 kombinierbar.

### Bezugszeichenliste

- 1: Elektrischer Antrieb
- 2: Antriebseinheit
- 3: Stator
- 4: Achse
- 5: Rotor
- 6: erstes Lager
- 7: zweites Lager
- 8: magnetischer Pol
- 9: Zahn
- 10: Übertragungselement
- 11: erster Strang der erste Wicklung
- 12: zweiter Strang der erste Wicklung
- 13: dritter Strang der erste Wicklung
- 14: erster Strang der zweiten Wicklung
- 15: zweiter Strang der zweiten Wicklung
- 16: dritter Strang der zweiten Wicklung
- 17: Abtrieb
- 18: erste Wicklung
- 19: zweite Wicklung
- 20: Luftspalt
- 21: erstes Isolationselement
- 22: zweites Isolationselement
- 23: drittes Isolationselement
- 24: redundante Steuerungseinheit
- 25: erste Steuerungseinheit
- 26: zweite Steuerungseinheit
- 27: Energiespeicher
- 28: Netzteil
- 29: Koppelelement
- 30: erster Stator
- 31: zweiter Stator
- 32: Grundkörper

- 100: Türantrieb
- 200: Türflügel
- 300: Übertragungsvorrichtung
- 301: Riemen
- 310: erstes Wicklungsschema
- 320: zweites Wicklungsschema
- 330: drittes Wicklungsschema
- 400: Mittelachse

## Patentansprüche

1. Türantrieb (100) mit einer Antriebseinheit (2), welche einen elektrischen Antrieb (1) mit einem Stator (3) umfasst, wobei der Stator (3) aufweist: einen Grundkörper (32) mit einer vordefinierten Höhe entlang einer Mittelachse des Stators (3), wobei der Grundkörper (32) eine Vielzahl von Zähnen (9) aufweist, sowie zumindest eine erste Wicklung (18) und zumindest eine von der ersten Wicklung (18) unabhängige zweite Wicklung (19), wobei eine Vielzahl von magnetischen Polen (8) durch die erste Wicklung (18) und/oder die zweite Wicklung (19) gebildet ist, **dadurch gekennzeichnet, dass** sich die erste Wicklung (18) und die zweite Wicklung (19) zumindest über die vordefinierte Höhe erstrecken, dass die erste Wicklung (18) einen ersten Strang (11), einen zweiten Strang (12) und einen dritten Strang (13) aufweist, während die zweite Wicklung (19) ebenso einen ersten Strang (14), einen zweiten Strang (15) und einen dritten Strang (16) aufweist, und dass zwei benachbarte Zähne (9) den ersten Strang (11) der ersten Wicklung (18), weitere zwei benachbarte Zähne (9) den zweiten Strang (12) der ersten Wicklung (18), weitere zwei benachbarte Zähne (9) den dritten Strang (13) der ersten Wicklung (18), weitere zwei benachbarte Zähne (9) den ersten Strang (14) der zweiten Wicklung (19), weitere zwei benachbarte Zähne (9) den zweiten Strang (15) der zweiten Wicklung (19), und weitere zwei benachbarte Zähne (9) den dritten Strang (16) der zweiten Wicklung (19) aufweisen.

2. Türantrieb (100) nach Anspruch 1, **dadurch gekennzeichnet, dass** eine Isolierung (20, 21, 22, 23) zwischen der ersten Wicklung (18) und der zweiten Wicklung (19) angebracht ist.

3. Türantrieb (100) nach einem der vorhergehenden Ansprüche, **dadurch gekennzeichnet, dass** jeder Zahn (9) zumindest teilweise von der ersten Wicklung (18) oder von der zweiten Wicklung (19) umwickelt ist, so dass jeder Zahn (9) einen Pol (8) bildet.

4. Türantrieb (100) nach einem der vorhergehenden Ansprüche, **dadurch gekennzeichnet, dass** der Stator (3) zumindest teilweise von einem Isolationskörper umgeben ist.

5. Türantrieb (100) nach einem der vorhergehenden Ansprüche, **dadurch gekennzeichnet, dass** der elektrische Antrieb (1) eine Achse (4) und einen Rotor (5) aufweist,
wobei der Stator (3) fest mit der Achse (4) verbunden ist, und
wobei der Rotor (5) rotierbar auf der Achse (4) gelagert ist und eine Glockenform aufweist, die den Stator (3) umgibt.

6. Türantrieb nach Anspruch 5, **gekennzeichnet durch** einen ersten Stator (30) und einen zweiten Stator (31), wobei der Rotor (5) den ersten Stator (30) und den zweiten Stator (31) umgibt.

7. Türantrieb (100) nach einem der vorhergehenden Ansprüche, **dadurch gekennzeichnet, dass** die erste Wicklung (18) und die zweite Wicklung (19) mit einer redundanten Steuereinheit (24) verbunden ist.

8. Türantrieb (100) nach einem der vorhergehenden Ansprüche, **dadurch gekennzeichnet, dass** die erste Wicklung (18) mit einer ersten Steuereinheit (25) und die zweite Wicklung (19) mit einer zweiten Steuereinheit (26) verbunden ist.

9. Türantrieb (100) nach einem der Ansprüche 7 oder 8, **dadurch gekennzeichnet, dass** die redundante Steuereinheit (24) oder die erste Steuereinheit (25) und/oder die zweite Steuereinheit (26) eingerichtet sind, eine sensorlose Kommutierung auszuführen.

10. Türantrieb (100) nach einem der Ansprüche 7 bis 9, **dadurch gekennzeichnet, dass** die redundante Steuereinheit (24) oder die erste Steuereinheit (25) und/oder die zweite Steuereinheit (26) eingerichtet sind, für einen Betrieb des elektrischen Antriebs (1) sowohl die erste Wicklung (18) als auch die zweite Wicklung (19) anzusteuern.

11. Türantrieb (100) nach einem der vorhergehenden Ansprüche, **dadurch gekennzeichnet, dass** die Antriebseinheit (2) einen Abtrieb aufweist, wobei der Abtrieb von dem elektrischen Antrieb (1) antreibbar ist und mit einer Übertragungsvorrichtung zur Bewegung von Türflügeln verbindbar ist.

12. Türantrieb (100) nach Anspruch 11, **gekennzeichnet durch** zwei elektrische Antriebe (1), wobei die elektrischen Antriebe (1) über ein Koppelelement (29), insbesondere über eine Zahnradstufe, aneinander gekoppelt sind.

## Claims

1. A door drive (100) including a drive unit (2), which comprises an electrical drive (1) with a stator (3), wherein the stator (3) includes: a basic body (32) with a predefined height along a central axis of the stator (3), wherein the basic body (32) includes a plurality of teeth (9), as well as at least one first winding (18) and at least one second winding (19), which is independent from the first winding (18), wherein a plurality of magnetic poles (8) is formed by means of the first winding (18) and/or the second winding (19), **characterized in that** the first winding (18) and the second winding (19) extend over the predefined height, **in that** the first winding (18) includes a first winding phase (11), a second winding phase (12) and a third winding phase (13), whereas the second winding (19) likewise includes a first winding phase (14), a second winding phase (15) and a third winding phase (16), and **in that** two neighbouring teeth (9) include the first winding phase (11) of the first winding (18), further two neighbouring teeth (9) include the second winding phase (12) of the first winding (18), further two neighbouring teeth (9) include the third winding phase (13) of the first winding (18), further two neighbouring teeth (9) include the first winding phase (14) of the second winding (19), further two neighbouring teeth (9) include the second winding phase (15) of the second winding (19), and further two neighbouring teeth (9) include the third winding phase (16) of the second winding (19).

2. The door drive (100) according to claim 1, **characterized in that** an insulation (20, 21, 22, 23) is affixed between the first winding (18) and the second winding (19).

3. The door drive (100) according to any of the preceding claims, **characterized in that** each tooth (9) is wound at least partially by the first winding (18) or by the second winding (19) such that each tooth (9) forms a pole (8).

4. The door drive (100) according to any of the preceding claims, **characterized in that** the stator (3) is surrounded at least partially by an insulation body.

5. The door drive (100) according to any of the preceding claims, **characterized in that** the electrical drive (1) includes an axis (4) and a rotor (5),
wherein the stator (3) is firmly connected to the axis (4), and
wherein the rotor (5) is rotatably supported on the axis (4) and presents a bell shape, which surrounds the stator (3).

6. The door drive according to claim 5, **characterized by** a first stator (30) and a second stator (31), wherein the rotor (5) surrounds the first stator (30) and the second stator (31).

7. The door drive (100) according to any of the preceding claims, **characterized in that** the first winding (18) and the second winding (19) are connected to a redundant control unit (24).

8. The door drive (100) according to any of the preceding claims, **characterized in that** the first winding (18) is connected to a first control unit (25) and the second winding (19) to a second control unit (26).

9. The door drive (100) according to any of the claims 7 or 8, **characterized in that** the redundant control unit (24) or the first control unit (25) and/or the second control unit (26) are/is adapted to execute a sensor-less commutation.

10. The door drive (100) according to any of the claims 7 to 9, **characterized in that** the redundant control unit (24) or the first control unit (25) and/or the second control unit (26) are/is adapted for an operation of the electrical drive (1) for controlling both the first winding (18) and the second winding (19).

11. The door drive (100) according to any of the preceding claims, **characterized in that** the drive unit (2) includes an output, wherein the output is drivable by means of the electrical drive (1) and is connectable to a transfer device for moving door leaves.

12. The door drive (100) according to claim 11, **characterized by** two electrical drives (1), wherein the electrical drives (1) are coupled to each other via a coupling element (29), in particular via a gear stage.

## Revendications

1. Entraînement de porte (100) avec une unité d'entraînement (2), laquelle comporte un entraînement électrique (1) avec un stator (3), le stator (3) comprenant : un corps de base (32) avec une hauteur prédéfinie le long d'un axe central du stator (3), le corps de base (32) présentant une pluralité de dents (9), de même qu'au moins un premier bobinage (18) et au moins un deuxième bobinage (19) indépendant du premier bobinage (18), une pluralité de pôles magnétiques (8) étant aménagée par le premier bobinage (18) et/ou le deuxième bobinage (19), **caractérisé en ce que** le premier bobinage (18) et le deuxième bobinage (19) s'étendent au moins sur la hauteur prédéfinie, **en ce que** le premier bobinage (18) comprend un premier faisceau d'enroulements (11), un deuxième faisceau d'enroulements (12) et un troisième faisceau d'enroulements (13), tandis que le deuxième bobinage (19) comprend également un premier faisceau d'enroulements (14), un deuxième faisceau d'enroulements (15) et un troisième faisceau d'enroulements (16), et **en ce que** présentent deux dents avoisinantes (9) le premier faisceau d'enroulements (11) du premier bobinage (18), deux autres dents avoisinantes (9) le deuxième faisceau d'enroulements (12) du premier bobinage (18), deux autres dents avoisinantes (9) le troisième faisceau d'enroulements (13) du premier bobinage (18), deux autres dents avoisinantes (9) le premier faisceau d'enroulements (14) du deuxième bobinage (19), deux autres dents avoisinantes (9) le deuxième faisceau d'enroulements (15) du deuxième bobinage (19), et deux autres dents avoisinantes (9) le troisième faisceau d'enroulements (16) du deuxième bobinage (19).

2. Entraînement de porte (100) selon la revendication 1, **caractérisé en ce qu'**un isolement (20, 21, 22, 23) est installé entre le premier bobinage (18) et le deuxième bobinage (19).

3. Entraînement de porte (100) selon l'une des revendications précédentes, **caractérisé en ce que** chaque dent (9) est enroulée au moins partiellement par le premier bobinage (18) ou par le deuxième bobinage (19), de sorte que chaque dent (9) forme un pôle (8).

4. Entraînement de porte (100) selon l'une des revendications précédentes, **caractérisé en ce que** le stator (3) est entouré au moins partiellement par un corps d'isolement.

5. Entraînement de porte (100) selon l'une des revendications précédentes, **caractérisé en ce que** l'entraînement électrique (1) présente un axe (4) et un rotor (5),
le stator (3) étant fermement connecté à l'axe (4), et
le rotor (5) étant supporté de façon rotative sur l'axe (4) et présentant une forme de cloche,
laquelle entoure le stator (3).

6. Entraînement de porte selon la revendication 5, **caractérisé par** un premier stator (30) et un deuxième stator (31), le rotor (5) entourant le premier stator (30) et le deuxième stator (31).

7. Entraînement de porte (100) selon l'une des revendications précédentes, **caractérisé en ce que** le premier bobinage (18) et le deuxième bobinage (19) sont connectés à une unité de contrôle redondante (24).

8. Entraînement de porte (100) selon l'une des revendications précédentes, **caractérisé en ce que** le premier bobinage (18) est connecté à une première unité de contrôle (25) et le deuxième bobinage (19) à une deuxième unité de contrôle (26).

9. Entraînement de porte (100) selon l'une des revendications 7 ou 8, **caractérisé en ce que** l'unité de contrôle redondante (24) ou la première unité de contrôle (25) et/ou la deuxième unité de contrôle (26) sont/est adaptée(s) à exécuter une commutation sans détecteurs.

10. Entraînement de porte (100) selon l'une des revendications 7 à 9, **caractérisé en ce que** l'unité de contrôle redondante (24) ou la première unité de contrôle (25) et/ou la deuxième unité de contrôle (26) sont/est adaptée(s) à une opération de l'entraînement électrique (1) pour activer non seulement le premier bobinage (18) mais aussi le deuxième bobinage (19).

11. Entraînement de porte (100) selon l'une des revendications précédentes, **caractérisé en ce que** l'unité d'entraînement (2) présente un entraînement de sortie, l'entraînement de sortie étant entraînable par l'entraînement électrique (1) et étant connectable à un dispositif de transfert pour le mouvement de vantaux de porte.

12. Entraînement de porte (100) selon la revendication 11, **caractérisé par** deux entraînements électriques (1), les entraînements électriques (1) étant accouplés l'un à l'autre par l'intermédiaire d'un élément d'accouplement (29) tout particulièrement via un étage à roues dentées.
